# EUROPEAN PATENT SPECIFICATION

(11) **EP 2 995 544 B1**
(45) Date of publication and mention of the grant of the patent: **10.01.2018**
(21) Application number: 13884156.4
(22) Date of filing: 08.05.2013
(51) Int. Cl.: B62M 6/55, B62M 6/50

(54) **ELECTRIC ASSIST BICYCLE**
ELEKTRISCHES HILFSFAHRRAD
BICYCLETTE A ASSISTANCE ELECTRIQUE

(43) Date of publication of application: 16.03.2016
(73) Proprietor: Panasonic Intellectual Property Management Co., Ltd., Osaka-shi, Osaka 540-6207 (JP)
(72) Inventor: KAWAKAMI, Masafumi, Osaka 540-6207 (JP); FUJII, Naoki, Osaka 540-6207 (JP); OZAWA, Satoshi, Osaka 540-6207 (JP)
(74) Representative: Grünecker Patent- und Rechtsanwälte PartG mbB
(86) International application number: PCT/JP2013/002949
(87) International publication number: WO 2014/181371

(56) References cited:
- EP-A1- 0 776 818
- EP-A1- 2 562 073
- WO-A1-2012/035682
- DE-A1- 4 027 365
- JP-A- H09 290 794
- JP-A- H11 351 947
- JP-A- 2001 063 678
- JP-A- 2005 225 489
- US-A- 5 909 781

## Description

### Technical Field

The present invention relates to an electric assist bicycle capable of traveling with a combination of a human driving force generated by a pedal force from a pedal and an auxiliary driving force generated by a motor.

### Background Art

A known electric assist bicycle including a motor powered from a power storage such as a battery detects a human driving force, which includes a pedal force applied to a pedal, by means of a torque sensor and adds an auxiliary driving force (assisting force) of the motor according to the human driving force. Thus, such an electric assist bicycle can smoothly travel on an uphill and so on.

In such an electric assist bicycle, a motor drive unit including the motor is disposed near a crank shaft. Moreover, the electric assist bicycle configured thus has a relatively heavy motor drive unit that is disposed at a low position at the center of the electric assist bicycle (that is, the intermediate point between the front wheel and the rear wheel) in the longitudinal direction thereof. Thus, the front and rear wheels of the electric assist bicycle configured thus can be lifted more easily than an electric assist bicycle having a motor in the hub of the front or rear wheel. Such an electric assist bicycle can easily pass over a step of a path, achieving ease of handling and high traveling stability.

Motor drive units to be provided in such an electric assist bicycle are broadly classified into a motor drive unit 100, a so-called double-shaft type including, as shown in FIG. 15, an auxiliary driving force output sprocket 103 that outputs an auxiliary driving force from a motor in addition to a driving sprocket (also called a front sprocket or a chain sprocket) 102 serving as a human driving force output wheel disposed near one end of a crank shaft 101, and a motor drive unit 200 shown in FIGS. 16 and 17, a so-called single-shaft type that combines a human driving force generated by a pedal force and an auxiliary driving force generated by a motor in the motor drive unit 200 and outputs the resultant force from a driving sprocket 201.

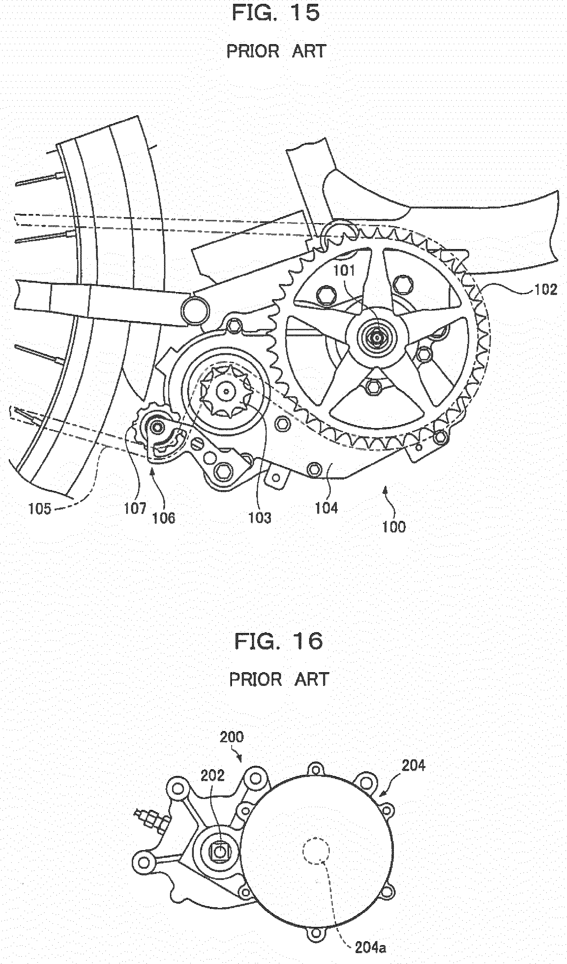

The double-shaft motor drive unit 100 is disclosed in, for example, Patent Literature 1. As shown in FIG. 15, the auxiliary driving force output sprocket 103 protrudes to the outside of a unit case 104 of the motor drive unit 100 from a portion behind the driving sprocket 102 of the motor drive unit 100. The driving sprocket 102 that outputs a human driving force and the auxiliary driving force output sprocket 103 that outputs an auxiliary driving force are engaged with a chain 105 serving as an endless driving force transmission member. The human driving force and the auxiliary driving force are combined by the chain 105 and then the resultant force is transmitted to the rear wheel.

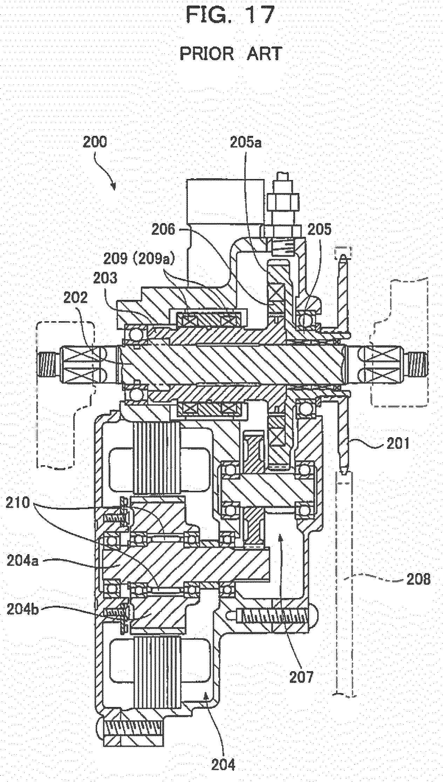

Further behind the auxiliary driving force output sprocket 103, a tensioner device (also called a guide device) 106 is provided in engagement with the chain 105, which has been engaged with the auxiliary driving force output sprocket 103, so as to guide the chain 105 downward. Moreover, a tension sprocket 107 provided in the tensioner device 106 increases the winding angle of the chain 105 engaged with the auxiliary driving force unit 200 is disclosed in, for example, Patent Literature 2, which discloses the features of the preamble of claim 1. As shown in FIGS. 16 and 17, the outer periphery of a crank shaft 202 that receives a human driving force transmitted from a pedal has a cylindrical human power transmission member 203 that receives the human driving force transmitted by serration coupling and so on, and a combined-force member 205 where a human driving force transmitted via the human power transmission member 203 is combined with an auxiliary driving force from a motor 204. Subsequently, the human driving force from the human power transmission member 203 is transmitted to the combined-force member 205 via a one-way clutch 206. A large-diameter gear 205a that receives an auxiliary driving force from the motor 204 via a deceleration mechanism 207 is formed on one end of the combined-force member 205, whereas the driving sprocket 201 is attached to another end of the combined-force member 205, the driving sprocket 201 serving as a driving force output wheel engaged with a chain 208 serving as an endless driving force transmission member. A resultant force on the combined-force member 205 is transmitted from the driving sprocket 201 to the rear wheel through the chain sprocket 201 is engaged with the chain 208 and the contrast, the double-shaft motor drive unit 100 needs to engage, as shown in FIG. 15, the driving sprocket 102 for transmitting a human driving force, the auxiliary driving force output sprocket 103 for transmitting an auxiliary driving force, and the tension sprocket 107 with the chain 105.

Thus, the area of the single-shaft motor drive unit 200 in side view (laterally projected area) can be advantageously smaller (can be made compact) than that of the double-shaft motor drive unit 100 by devising the layout of the motor 204 and the deceleration mechanism 207. Moreover, a so-called front derailleur can be easily attached to the single-shaft motor drive unit 200 including the driving sprocket 201 with multiple stages. On the other hand, in the double-shaft motor drive unit 100, the driving sprocket 102, the auxiliary driving force output sprocket 103, and the tension sprocket 107 need to be engaged with the chain 105, leading to difficulty in attaching the front derailleur.

Moreover, the single-shaft motor drive unit 200 advantageously eliminates the need for providing the tensioner device 106 of the tension sprocket 107 or the like. Generally, braking devices used for electric assist bicycles include a rim brake, a band brake, and a roller brake that are operated with a brake lever attached to a handle bar as those of ordinary bicycles. Depending on the region or the request of an operator, the attachment of a coaster brake to the rear wheel may be required. The coaster brake is operated by rotating the pedal opposite to a forward rotation direction. In this case, however, the pedal rotated in the opposite direction applies a tension that pulls the lower part of the chain forward. Thus, the double-shaft motor drive unit 100 needs a unique design for the tensioner device 106, whereas the single-shaft motor drive unit 200 advantageously eliminates the need for such a unique design.

Typically, in the above advantageous single-shaft motor drive unit 200, a magneto-striction torque sensor 209 for detecting a human driving force is provided on the outer periphery of the human power transmission member 203, which receives a human driving force transmitted from the crank shaft 202, and a portion opposed to the outer periphery. Specifically, a magneto-striction generation portion is formed on the outer periphery of the human power transmission member 203, and a coil 209a for detecting a change of magnetism on the magneto-striction generation portion is disposed to oppose to the magneto-striction generation portion. When the right and left pedals are pressed, the crank shaft 202 is twisted by a pedal force (human driving force). Thus, the twisted state of the human power transmission member 203 that receives a human driving force transmitted from the crank shaft 202 is detected by the torque sensor 209.

The magneto-striction generation portion of the torque sensor 209 is formed on the outer periphery of the human power transmission member 203 while the one-way clutch 206 is attached to the end of the human power transmission member 203 as has been discussed. The one-way clutch 206 is provided for the following reason: even if a rider stops pedaling on such a conventional electric assist bicycle, the motor 204 is controlled so as to keep rotating for a while (so-called delay control). In this case, the absence of the one-way clutch 206 may transmit an auxiliary driving force from the motor 204 to the crank shaft 202, keeping the rotations of the pedals. Thus, the one-way clutch 206 interrupts an auxiliary driving force from the motor 204 so as not to apply such a force to the crank shaft 202 or the pedals. The one-way clutch 206 may be referred to as the one-way clutch 206 for interrupting an auxiliary driving force.

As shown in FIG. 17, a one-way clutch 210 is also provided between a rotating shaft 204a and a rotor 204b of the motor 204 in the single-shaft motor drive unit 200. The one-way clutch 210 eliminates the need for rotating the rotor 204b of the motor 204 if a battery for driving the motor 204 has run out during pedaling. Specifically, if the battery has run out during pedaling, the absence of the one-way clutch 210 rotates the rotor 204b of the motor 204 with a pedal force of the pedal. Thus, the cogging torque or the like of the motor 204 requires a large force for rotating the pedals (so-called drag resistance). To address this problem, the one-way clutch 210 is provided to eliminate the need for rotating the rotor 204b of the motor 204. This eliminates the need for applying an excessive force generated by, for example, the cogging torque of the motor 204. The one-way clutch 210 may be referred to as the one-way clutch 210 for interrupting human power.

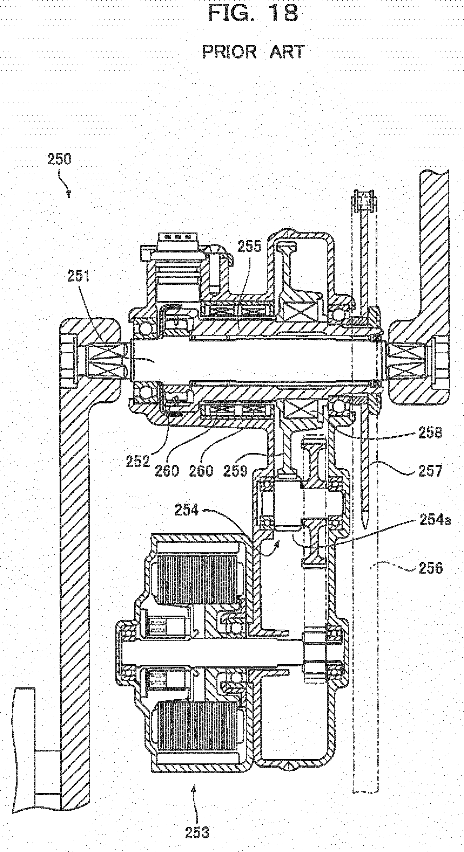

Patent Literature 3 discloses an example of a single-shaft motor drive unit. As shown in FIG. 18, a single-shaft motor drive unit 250 includes a cylindrical combined-force member 255 disposed on the outer periphery of a crank shaft 251 that receives a human driving force transmitted from a pedal. The combined-force member 255 receives a human driving force transmitted from the crank shaft 251 through a one-way clutch 252 attached to one end of the combined-force member 255 and receives an auxiliary driving force transmitted from a motor 253 through a deceleration mechanism 254. Moreover, a large-diameter gear 259 engaged with an output gear 254a of the deceleration mechanism 254 is attached to another one-way clutch 258 near another end of the combined-force member 255. An auxiliary driving force from the motor 253 is transmitted to the combined-force member 255 through the deceleration mechanism 254, the large-diameter gear 259, and the one-way clutch 258, and then a resultant force combined on the combined-force member 255 is transmitted from a driving sprocket 257 to the rear wheel through a chain 256.

The single-shaft motor drive unit 250 includes a magneto-striction generation portion formed on the outer periphery of the combined-force member 255 that receives a human driving force transmitted from the crank shaft 251 and an auxiliary driving force transmitted from the motor 253, and magneto-striction torque sensors 260, each having a coil that is opposed to the magneto-striction generation portion to detect a change of magnetism on the magneto-striction generation portion. When the right and left pedals are pressed, the crank shaft 251 is twisted and thus the twisted state of the combined-force member 255 that receives a human driving force transmitted from the crank shaft 251 is detected by the torque sensors 260.

In the single-shaft motor drive unit 250 of FIG. 18, the one-way clutch 252 is attached to the one end of the combined-force member 255. Thus, even if a rider stops pedaling, the motor 253 keeps rotating for a while. Also in this case, an auxiliary driving force from the motor 253 is interrupted by the one-way clutch 252 so as not to be applied to the crank shaft 251 or the pedals.

### Citation List

### Patent Literature

Patent Literature 1: Japanese Patent Laid-Open No. 2009-208710
Patent Literature 2: Japanese Patent Laid-Open No. 10-250673
Patent Literature 3: Japanese Patent Laid-Open No. 9-95289

### Summary of Invention

### Technical Problem

In the conventional single-shaft motor drive unit 200, however, the one-way clutch 206 shown in FIG. 17 is attached to the human power transmission member 203 provided with the torque sensor 209 or the one-way clutches 252 and 258 shown in FIG. 18 are attached to the combined-force member 255 provided with the torque sensors 260. Thus, vibrations during the switching operations of the one-way clutches 206, 252, and 258 and vibrations during engagement and passage of a cam are directly transmitted to the human power transmission member 203 provided with the torque sensor 209 and the combined-force member 255 provided with the torque sensors 260. This may cause noise during torque detection, leading to deterioration of torque detection capability.

In order to keep satisfactory assembly even after the one-way clutches 206, 252, and 258 are attached to the human power transmission member 203 and the combined-force member 255, the human power transmission member 203 and the combined-force member 255 are desirably made of materials having high wear resistance and are desirably subjected to heat treatment. Since the magneto-striction generation portions of the torque sensors 209 and 260 need to be formed on the surfaces of the human power transmission member 203 and the combined-force member 255, the materials of the human power transmission member 203 and the combined-force member 255 are severely limited. In some cases, the torque sensors need to have low torque detection capability.

Since the one-way clutches 206, 252, and 258 are attached to the human power transmission member 203 and the combined-force member 255, the rotations of the pedals rotated opposite to the forward rotation direction cannot be transmitted to the driving sprockets 102, 201, and 257 and the chains 105, 208, and 256. Thus, a coaster brake cannot be provided on the hub of the rear wheel.

Moreover, the absence of the one-way clutches 206, 252, and 258 attached to the human power transmission member 203 and the combined-force member 255 allows transmission of an auxiliary driving force from the motor 204 to the crank shaft 202. This may erroneously keep rotating the pedals.

The present invention has been devised to solve the problems. An object of the present invention is to provide an electric assist bicycle including a so-called single-shaft motor drive unit that can satisfactorily keep torque detection capability and is compatible with a coaster brake.

### Solution to Problem

In order to solve the problems, the present invention is an electric assist bicycle capable of traveling with a combination of a human driving force generated by a pedal force from a pedal and an auxiliary driving force generated by a motor, the electric assist bicycle being configured such that a cylindrical human power transmission member for receiving a human driving force is disposed on the outer periphery of a crank shaft for receiving the human driving force transmitted from the pedal, the human power transmission member having a magneto-striction generation portion for a torque sensor for detecting the human driving force, a combined-force member is disposed on the outer periphery of the crank shaft so as to combine the human driving force transmitted through the human power transmission member and an auxiliary driving force from the motor, and the resultant force of the human driving force and the auxiliary driving force that are combined by the combined-force member is transmitted to a rear wheel through a driving force output wheel coaxial with the crank shaft and an endless driving force transmission member looped over the human driving force output wheel, wherein the crank shaft, the human power transmission member, and the combined-force member form a driving force transmission path not provided with a one-way clutch, and the crank shaft is rotated so as to rotate the human power transmission member and the combined-force member accordingly regardless of relative rotation directions of the crank shaft, the human power transmission member, and the combined-force member, the electric assist bicycle further including a rotation detector that detects a rotation of one of the crank shaft and a member rotating integrally with the crank shaft.

With this configuration, a one-way clutch is not provided on the driving force transmission path including the crank shaft, the human power transmission member, and the combined-force member. Thus, even when the human power transmission member includes the magneto-striction generation portion for the torque sensor, vibrations caused by a one-way clutch are not transmitted to the human power transmission member. This can satisfactorily detect a torque (human driving force). Since a one-way clutch does not need to be assembled to the human power transmission member, the material of the human power transmission member can be selected from a wide range of materials and thus a material with high torque detection capability is usable. Moreover, the rotation detector is provided to detect a rotation of the crank shaft or the member rotating integrally with the crank shaft. Thus, a stopped or reversed rotation of the pedal can be detected by the rotation detector, thereby stopping the motor at the detection of a stopped or reversed rotation of the pedal.

The rotation detector of the present invention is configured so as to detect a stopped or reversed rotation of the pedal, and the motor is stopped or braked by a control unit when the rotation detector detects a stop or reversed rotation of the pedal.

With the configuration, when a rider stops pressing the pedals or reversely rotates the pedals during riding, this operation is detected by the rotation detector, and then the motor is stopped or braked. This can prevent the application of an auxiliary driving force from the motor to the pedals.

According to the present invention, the rotation detector is an optical sensor. This can easily and reliably detect a rotation of the crank shaft or the member rotating integrally with the crank shaft, without magnetically affecting the torque sensor. Specifically, if the rotation detector is an additionally provided magnetic sensor, the torque sensor may be magnetically affected. This may cause noise during torque detection, leading to deterioration of torque detection capability. If the rotation detector is an optical sensor, the torque sensor is not magnetically affected. Moreover, the torque sensor may serve as the rotation detector. With this configuration, a rotating state can be easily and reliably detected under simple control, leading to quick detection. Moreover, a stopped or reversed rotation of the pedal can be quickly detected to stop the motor immediately.

The torque sensor may serve as the rotation detector or the rotation detector may be a magnetic sensor provided in addition to the torque sensor. The torque sensor serving as the rotation detector eliminates the need for providing a rotation detector in addition to the torque sensor, thereby reducing the manufacturing cost. The rotation detector may be an additional magnetic sensor. In this case, the influence of magnetism of a magnet or the like on the torque sensor needs to be eliminated by some means.

The present invention further includes a rotating body attached to the outer periphery of the combined-force member or the human power transmission member, the rotating body blocking or reflecting light of the optical sensor. With this configuration, the location of the rotating body for blocking or reflecting light of the optical sensor has a larger diameter than in the case where the rotating body is provided on the crank shaft, thereby improving the resolution of the rotation detector. Specifically, in a specific example of the rotating body, the rotating body includes a disc or cylinder having circumferentially formed toothing parts, and outgoing parts and light receiving parts are provided between the toothing parts. In this case, the disc or cylinder having the toothing parts formed is attached to the combined-force member or the human power transmission member having a larger diameter than the crank shaft. This can increase the number of the toothing parts located with a relatively large diameter without drastically increasing dimensions radially from the inner part to the outer part of the disc or cylinder having the toothing parts formed, thereby improving the resolution of the rotation detector as compared with in the formation of the toothing parts located with a relatively small diameter. In order to obtain the same resolution for the rotation detector in the attachment of the rotating body to the crank shaft, the dimensions of the disc or cylinder having the toothing parts formed may be increased radially from the inner part to the outer part of the disc or cylinder. In this case, the disc or cylinder having the toothing parts formed is likely to be deformed. To address this problem, the rotating body is attached to the combined-force member or the human power transmission member that is provided on the outer periphery of the crank shaft, eliminating the need for drastically increasing dimensions radially from the inner part to the outer part of the disc or cylinder. This can minimize the possibility of deformation of the rotating body.

According to the present invention, the control unit is provided so as to estimate a pedal position corresponding to a position relative to a rotation direction of the crank shaft, based on a torque change and an output signal detected by the rotation detector. Specifically, in the present invention, a one-way clutch is not provided between the crank shaft to which the pedals are assembled and the combined-force member to which the driving force output wheel is attached with the endless driving force transmission member, for example, a chain looped over the driving force output wheel. This does not change a relative position with respect to the rotation directions of the pedals, the crank shaft, the human power transmission member, and the combined-force member. Thus, the control unit can estimate, for example, the positions of the pedals according to the rotation positions of the crank shaft, the human power transmission member, and the combined-force member and a torque change.

Thus, for example, the present invention may further include a derailleur capable of adjusting timing for a gear change in response to a gear change instruction, and in response to the gear change instruction, the control unit may change a gear when a pedal force applied to the pedal is estimated to be reduced. In response to the gear change instruction, this configuration can properly change a gear when a pedal force applied to the pedal decreases (for example, when the pedal is located at the top dead center or the bottom dead center) at a proper gear change time; meanwhile, a load to a rider's foot is minimized.

The present invention further includes a coaster brake provided on the hub of the rear wheel, the coaster brake being activated when the pedal is rotated opposite to a forward rotation direction. Also in the case where the coaster brake is disposed on the hub of the rear wheel, a one-way clutch is not provided on the driving force transmission path including the crank shaft, the human power transmission member, and the combined-force member and thus the rotations of the crank shaft are always transmitted to the combined-force member. Thus, when the pedals are rotated opposite to forward traveling, the rotations of the pedals are satisfactorily transmitted to the coaster brake, satisfactorily activating the coaster brake.

The present invention further includes a deceleration mechanism disposed on an auxiliary-driving-force transmission path from the motor to the combined-force member, the deceleration mechanism including a plurality of reduction gears and reduction gear support shafts that support the reduction gears, wherein a one-way clutch for interrupting a human driving force is provided to prevent transmission of a human driving force from the combined-force member to the motor, between one of the reduction gears and one of the reduction gear support shafts.

With this configuration, even if the pedals are rotated when a battery runs out, the one-way clutch for interrupting a human driving force is provided between the reduction gear and the reduction gear support shaft so as to eliminate the need for rotating the reduction gears and motor. Thus, it is not necessary to apply an excessive force to the pedals.

According to the present invention, the motor, the combined-force member, the deceleration mechanism, and the control unit are assembled into a motor drive unit, and the motor and the control unit overlap each other in side view and are opposed to each other in the width direction of the motor drive unit.

With this configuration, the area of the motor drive unit in side view (laterally projected area) can be advantageously reduced (made more compact), particularly as the single-shaft motor drive unit. The motor and the control unit are opposed to each other in the width direction of the motor drive unit and thus the control unit is hardly affected by heat from the motor so as to keep high reliability.

### Advantageous Effects of Invention

According to the present invention, a one-way clutch is not provided on the driving force transmission path including the crank shaft, the human power transmission member, and the combined-force member. Thus, even if the human power transmission member includes the magneto-striction generation portion for the torque sensor, vibrations caused by a one-way clutch are not transmitted to the human power transmission member. This can satisfactorily detect a torque (human driving force). Since a one-way clutch does not need to be assembled to the human power transmission member, the material of the human power transmission member can be selected from a wide range of materials and thus a material with high torque detection capability is usable. This can improve the reliability of the electric assist bicycle. Moreover, the rotation detector is provided to detect a rotation of the crank shaft or the member rotating integrally with the crank shaft. Thus, a stopped or reversed rotation of the pedal can be detected by the rotation detector, thereby stopping the motor at the detection of a stopped or reversed rotation of the pedal.

The rotation detector is configured so as to detect a stopped or reversed rotation of the pedal. The motor is stopped or braked by the control unit when the rotation detector detects a stop or reversed rotation of the pedal. When a rider stops pressing the pedals or reversely rotates the pedals during riding, the motor can be stopped or braked immediately. This can quickly prevent the application of an auxiliary driving force from the motor to the pedals, eliminating the need for application of an excessive force to the pedals.

The rotation detector is an optical sensor. This can easily and reliably detect a rotation of the crank shaft or the member rotating integrally with the crank shaft, without magnetically affecting the torque sensor. As compared with the case where the torque sensor serves as the rotation detector, a rotation can be easily and reliably detected under simple control, leading to quick detection. Advantageously, a stopped or reversed rotation of the pedal can be quickly detected to stop the motor immediately. The torque sensor serving as the rotation detector eliminates the need for providing a rotation detector in addition to the torque sensor, thereby reducing the manufacturing cost.

Furthermore, the rotating body that blocks or reflects light of the optical sensor is attached to the outer periphery of the combined-force member or the human power transmission member, allowing the rotation detector to have a relatively high resolution. Also in the case where the rotating body is a disc or cylinder having toothing parts circumferentially formed and being attached to the outer periphery of the combined-force member or the human power transmission member, it is not necessary to drastically increase dimensions radially from the inner part to the outer part of the rotating body. This can minimize the possibility of deformation of the toothing parts and so on, thereby keeping high reliability.

According to the present invention, the control unit can be provided so as to estimate a pedal position corresponding to a position relative to a rotation direction of the crank shaft, based on a torque change and an output signal detected by the rotation detector. For example, the present invention includes a derailleur that can adjust timing for a gear change in response to a gear change instruction. A gear may be changed in response to the gear change instruction when the control unit estimates that a pedal force applied to the pedal may decrease. In response to the gear change instruction, this configuration can properly change a gear while minimizing a load to a rider's foot.

According to the present invention, also in the case where the coaster brake is provided on the hub of the rear wheel so as to be activated when the pedal is rotated opposite to the forward rotation direction, the coaster brake can be satisfactorily activated.

The present invention further includes the deceleration mechanism disposed on the auxiliary-driving-force transmission path from the motor to the combined-force member, the deceleration mechanism including the plurality of reduction gears and reduction gear support shafts that support the reduction gears. The one-way clutch for interrupting a human driving force is provided between one of the reduction gears and one of the reduction gear support shafts. Thus, even if the pedals are rotated when a battery runs out, the reduction gears and the motor do not need to be rotated, eliminating the need for applying an excessive force to the pedals (a so-called drag resistance can be considerably reduced).

Moreover, the motor, the combined-force member, the deceleration mechanism, and the control unit are assembled into the motor drive unit, and the motor and the control unit overlap each other in side view and are opposed to each other in the width direction of the motor drive unit. Thus, the area of the motor drive unit in side view (laterally projected area) can be reduced (can be made compact), particularly as the single-shaft motor drive unit, and the control unit is hardly affected by heat from the motor, thereby keeping high reliability.

### Brief Description of Drawings

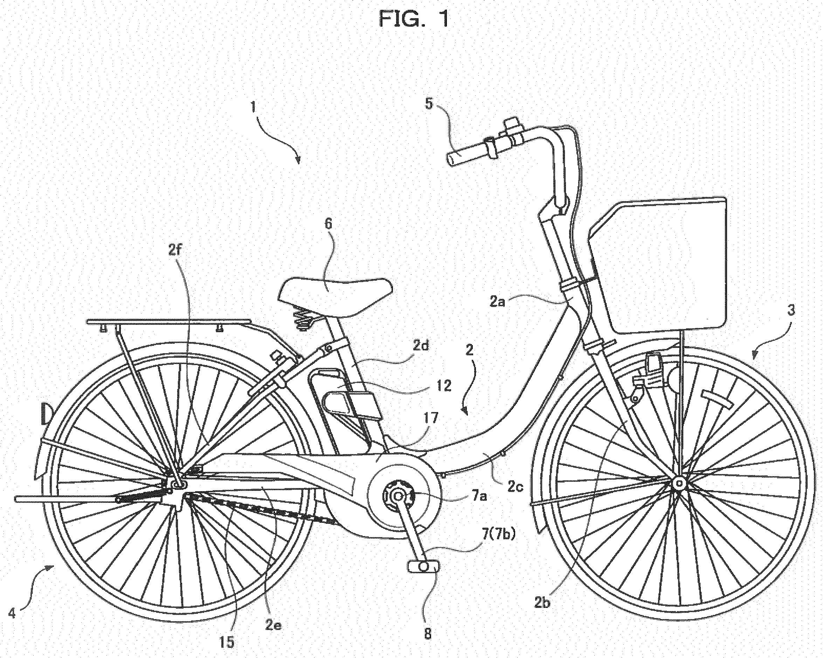

[FIG. 1] FIG. 1 is an overall side view of an electric assist bicycle according to an embodiment of the present invention.

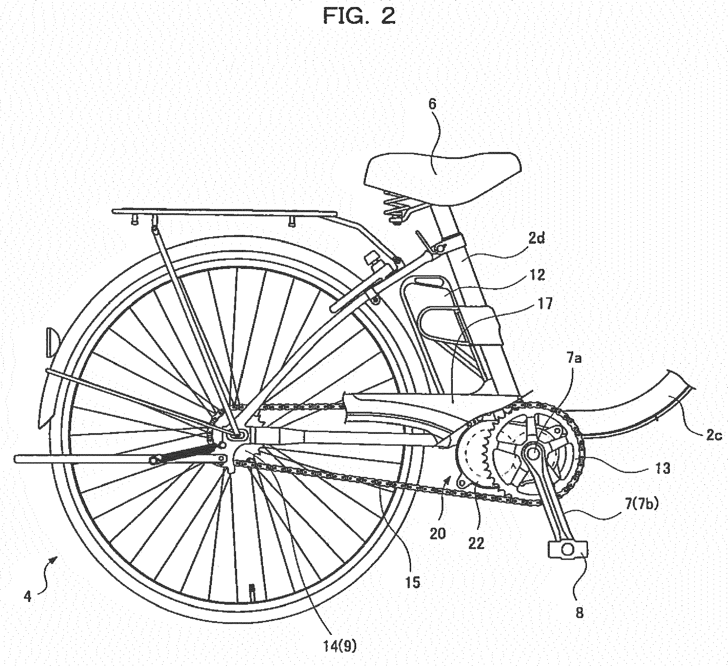

[FIG. 2] FIG. 2 is a partially cut side view of the electric assist bicycle.

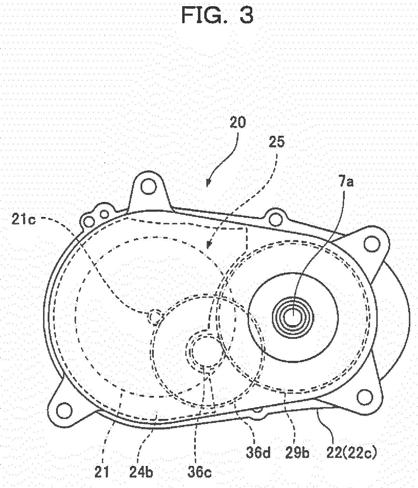

[FIG. 3] FIG. 3 is a side view of the motor drive unit of the electric assist bicycle (a driving sprocket is omitted).

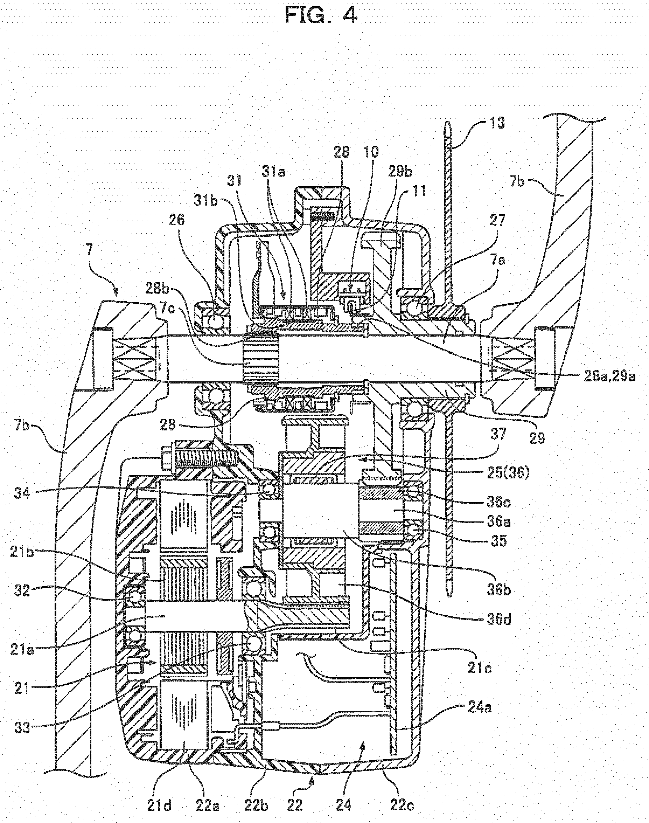

[FIG. 4] FIG. 4 is a plane section showing the motor drive unit of the electric assist bicycle.

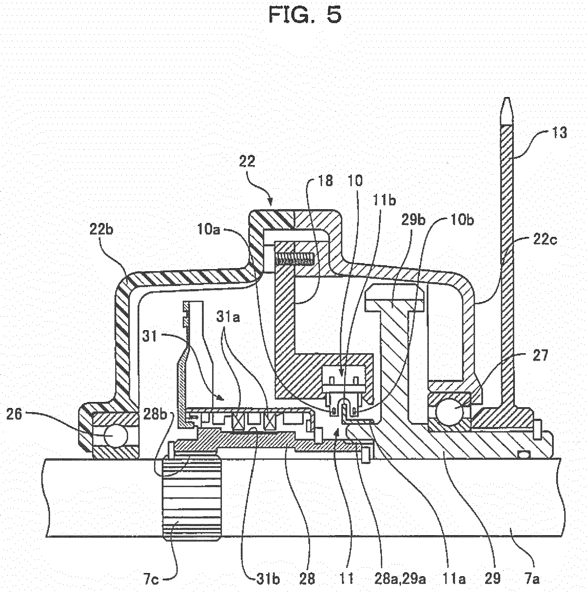

[FIG. 5] FIG. 5 is an enlarged plane section showing the principal part of the motor drive unit of the electric assist bicycle.

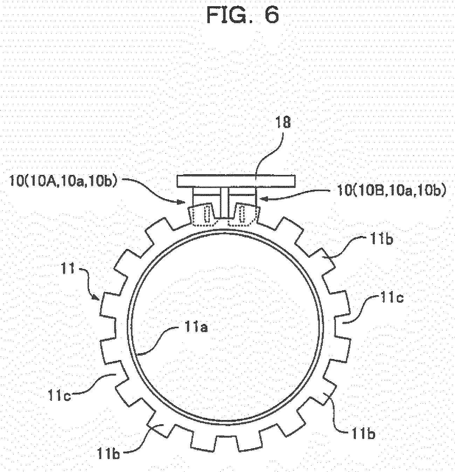

[FIG. 6] FIG. 6 is a side view showing a rotation detector and a rotating body for the motor drive unit of the electric assist bicycle.

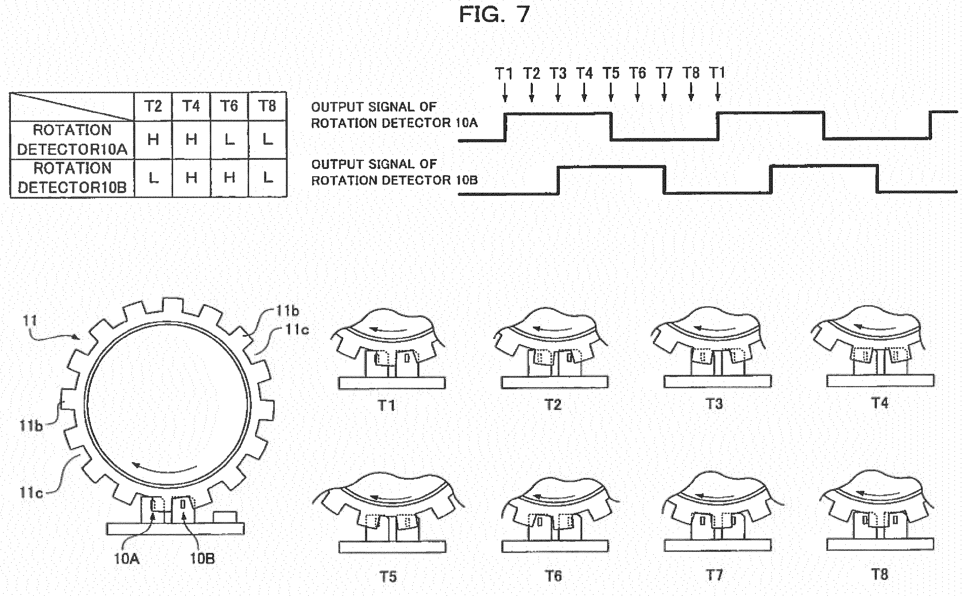

[FIG. 7] FIG. 7 is an explanatory drawing showing the operations of the rotation detector and the rotating body for the motor drive unit.

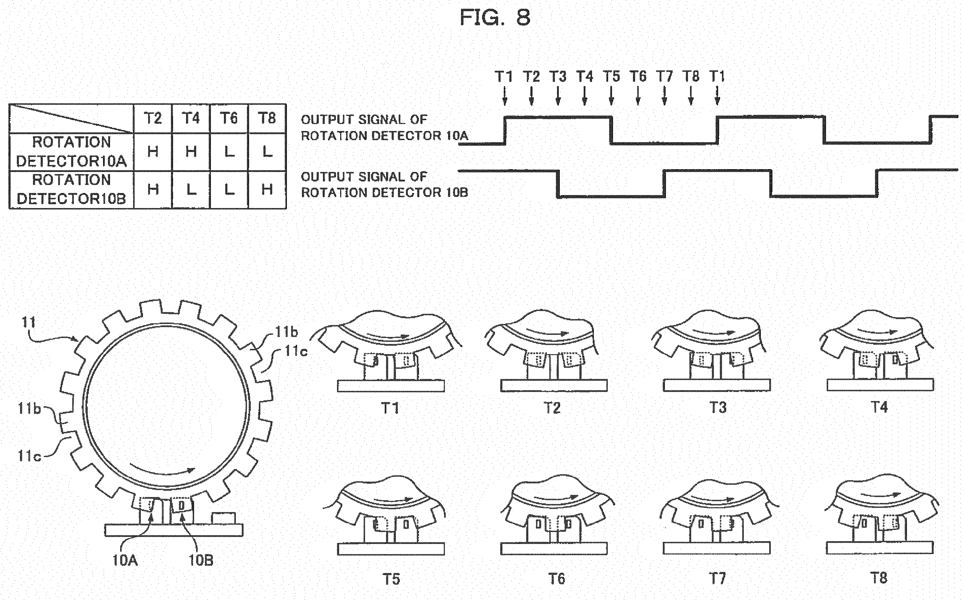

[FIG. 8] FIG. 8 is an explanatory drawing showing the operations of the rotation detector and the rotating body for the motor drive unit.

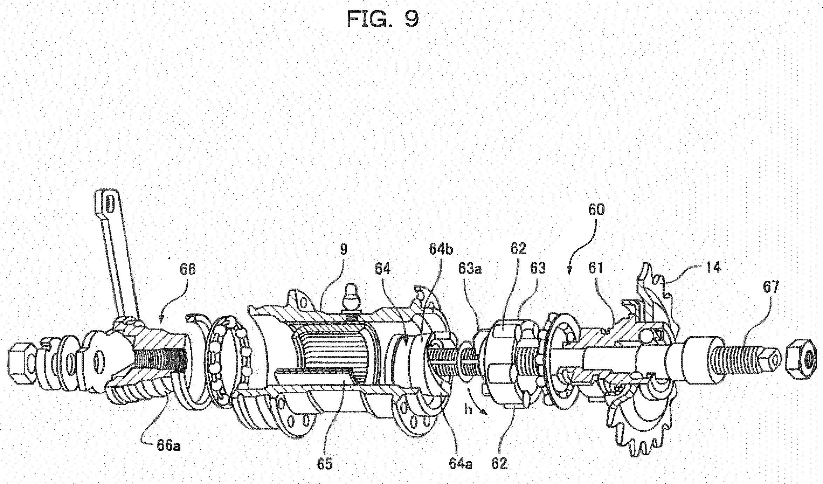

[FIG. 9] FIG. 9 is an exploded perspective view showing the hub of the rear wheel of the electric assist bicycle.

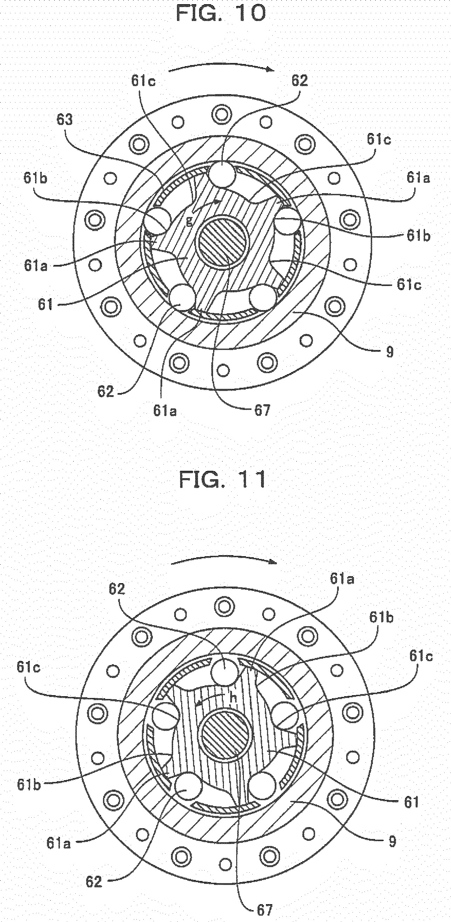

[FIG. 10] FIG. 10 is a longitudinal section showing the hub of the rear wheel of the electric assist bicycle, the rear wheel being rotated by a pedal force from pedals.
[FIG. 11] FIG. 11 is a longitudinal section showing the hub of the rear wheel of the electric assist bicycle with the pedals rotated opposite to forward traveling so as to activate a coaster brake or stop rotating during traveling.

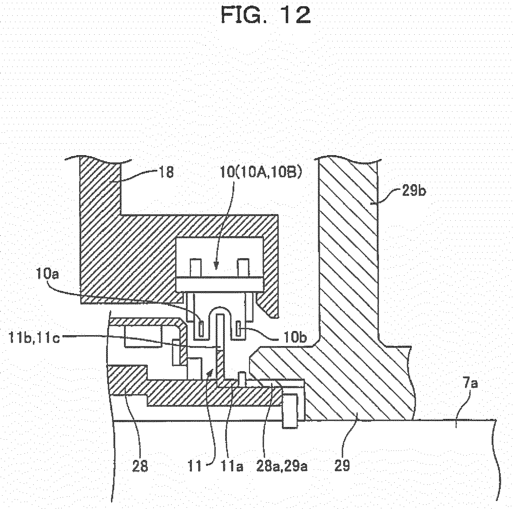

[FIG. 12] FIG. 12 is an enlarged plane section showing the motor drive unit of an electric assist bicycle according to another embodiment of the present invention.

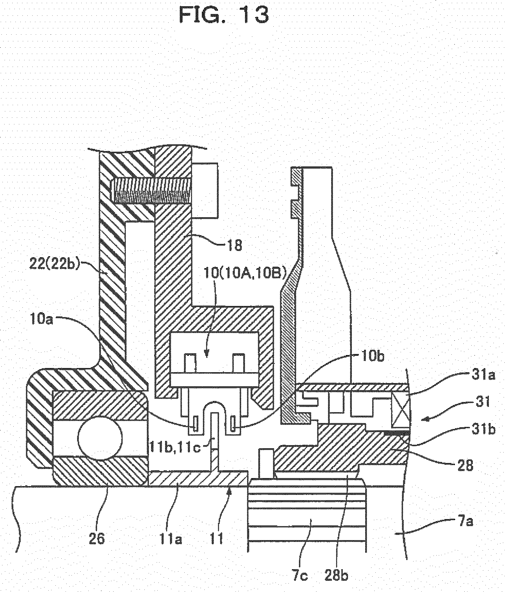

[FIG. 13] FIG. 13 is an enlarged plane section showing the motor drive unit of an electric assist bicycle according to still another embodiment of the present invention.

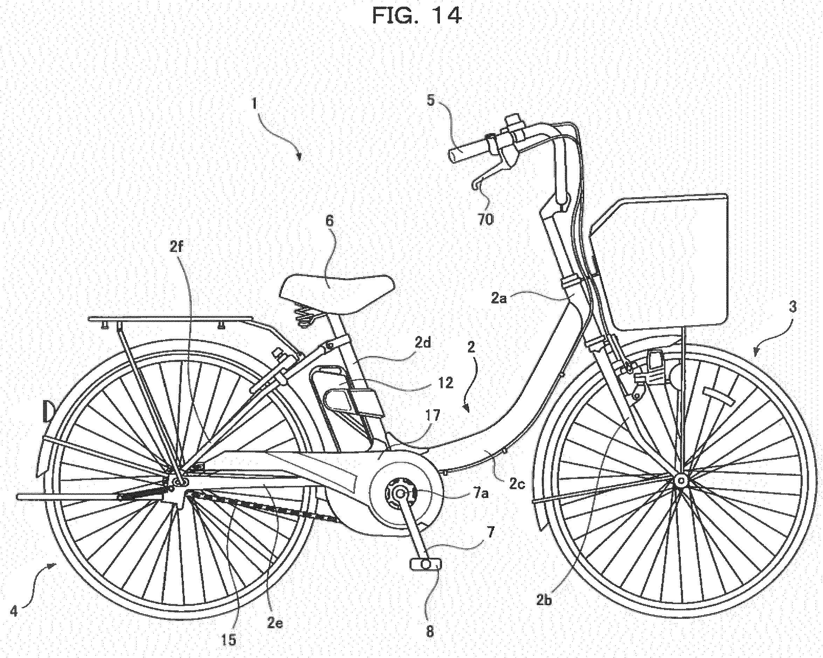

[FIG. 14] FIG. 14 is an overall side view of an electric assist bicycle according to still another embodiment of the present invention.
[FIG. 15] FIG. 15 is a side view showing a double-shaft motor drive unit in a conventional electric assist bicycle and a part near the motor drive unit.
[FIG. 16] FIG. 16 is a side view showing a single-shaft motor drive unit in the conventional electric assist bicycle.
[FIG. 17] FIG. 17 is a plane section of the single-shaft motor drive unit.
[FIG. 18] FIG. 18 is a plane section showing a single-shaft motor drive unit in another conventional electric assist bicycle.

### Description of Embodiments

An electric assist bicycle according to embodiments of the present invention will be described below with reference to the accompanying drawings. In the following explanation, a lateral direction and a longitudinal direction are set relative to the traveling direction of a rider on an electric assist bicycle 1. The configuration of the present invention is not limited to these directions.

In FIGS. 1 and 2, reference numeral 1 denotes an electric assist bicycle according to an embodiment of the present invention. As shown in FIGS. 1 and 2, the electric assist bicycle 1 includes a metallic frame 2 having a head tube 2a, a front fork 2b, a main tube 2c, a seat tube 2d, a chain stay 2e, and a seat stay 2f, a front wheel 3 rotatably attached to the lower end of the front fork 2b, a rear wheel 4 rotatably attached to the rear end of the chain stay 2e, a handle bar 5 that changes the direction of the front wheel 3, a saddle 6, a crank 7 and pedals 8 that receive a human driving force including a pedal force, a motor drive unit 20 including an electric motor 21 (see FIG. 4) serving as a driving source for generating an auxiliary driving force (assist force) and a control unit 24 (see FIG. 4) for electrically controlling the motor 21 and so on, a battery 12 including a secondary battery for supplying driving power to the motor 21, a manual operation part (not shown) that is attached to, for example, the handle bar 5 so as to be operated by a rider and so on, a driving sprocket (may be called a front sprocket, a crank sprocket, or a front gear) 13 that is attached so as to coaxially rotate with the crank 7 and serves as a driving force output wheel for outputting the resultant force of a human driving force and an auxiliary driving force, a rear sprocket (may be called a rear gear) 14 serving as a rear wheel attached to a hub (also called a rear hub) 9 of the rear wheel 4, a chain 15 serving as an endless driving force transmission member rotatably wound around the driving sprocket 13 and the rear sprocket 14 in an endless manner, and a chain cover 17 that laterally covers the chain 15 and so on. The battery 12 is an example of a power storage and is preferably a secondary battery. Another example of a power storage may be a capacitor. The crank 7 includes crank arms 7b that are laterally provided and a crank shaft 7a that connects the right and left crank arms 7b.

As shown in FIGS. 1 and 2, also in the electric assist bicycle, the motor drive unit 20 is disposed at the intermediate position between the front wheel 3 and the rear wheel 4, for example, substantially behind the crank shaft 7a (specifically, under the intermediate position). This configuration locates the relatively heavy motor drive unit 20 at the center of the electric assist bicycle 1 in the longitudinal direction. Thus, the front wheel 3 and the rear wheel 4 are easily lifted and the electric assist bicycle can easily pass over a step of a path, achieving ease of handling of the body (e.g., the frame 2) of the electric assist bicycle 1 and high traveling stability.

FIG. 3 is a side view of the motor drive unit 20 (the driving sprocket 13 is omitted). FIG. 4 is a plane section showing the motor drive unit 20.

As shown in FIGS. 3 and 4, the motor drive unit 20 includes a unit case 22 constituting an outer case. The unit case 22 includes a motor case 22a, a left case 22b, and a right case 22c. The crank shaft 7a laterally penetrates the front of the motor drive unit 20. Moreover, the outer periphery of the crank shaft 7a has a human power transmission member 28 that is substantially cylindrical and receives a human driving force transmitted from the crank shaft 7a and a combined-force member 29 that combines the human driving force transmitted through the human power transmission member 28 and an auxiliary driving force from the motor 21. Furthermore, a deceleration mechanism 25 including a reduction gear 36 is disposed at the center of the unit case 22 in the longitudinal direction, the motor 21 is disposed on the left side of the rear of the unit case 22, and the control unit 24 is disposed on the right side of the rear of the unit case 22. The control unit 24 includes a control printed circuit board 24a that has electronic components for performing kinds of electrical control and a storage containing kinds of information.

Specifically, as shown in FIG. 4, the crank shaft 7a laterally penetrating the front of the motor drive unit 20 is rotatably disposed with bearings 26 and 27. The cylindrical human power transmission member 28 is fit onto the outer periphery of the left part of the crank shaft 7a via a serration part (or spline part) 7c such that the human power transmission member 28 rotates as an integral part. Moreover, a serration part (or spline part) 28b is formed at a point corresponding to the serration part (or spline part) 7c of the crank shaft 7a inside the human power transmission member 28. The serration part 28b is engaged with the serration part (spline part) 7c of the crank shaft 7a.

A magneto-striction generation portion 31b having magnetic anisotropy is formed on the outer surface of the human power transmission member 28. Coils 31a are disposed with a certain clearance (space) on the outer periphery of the magneto-striction generation portion 31b. The magneto-striction generation portion 31b and the coils 31a constitute a magneto-striction torque sensor (human power detection part) 31. With this configuration, a human driving force from the crank shaft 7a is transmitted to the human power transmission member 28 and is detected by the torque sensor 31. In the magneto-striction torque sensor 31, the magneto-striction generation portion 31b is spirally formed with an angle of, for example, +45° to -45° with respect to the axial direction of the human power transmission member 28. When a human driving force is transmitted to the human power transmission member 28, the magneto-striction generation portion 31b on the surface of the human power transmission member 28 is distorted so as to cause portions thereof to increase or decrease in magnetic permeability. Thus, a difference in the inductance of the coils 31a is measured so as to detect the magnitude of a torque (human driving force). In the present embodiment, this configuration even allows, but not exclusively, detection of a reverse rotation of the crank shaft 7a.

The combined-force member 29 for combining a human driving force and an auxiliary driving force is disposed next to the right side of the human power transmission member 28 on the outer periphery of the crank shaft 7a so as to rotate with respect to the crank shaft 7a. A serration part (or spline part) 28a formed on the outer periphery of the right end of the human power transmission member 28 and a serration part (or spline part) 29a formed on the inner periphery of the left end of the combined-force member 29 are fit into the combined-force member 29. In the present embodiment, the serration part (or spline part) 29a formed on the inner periphery of the left end of the combined-force member 29 is fit onto the serration part (or spline part) 28a of the human power transmission member 28. In this configuration, a one-way clutch (one-way clutch for interrupting an auxiliary driving force) is not provided between the crank shaft 7a and the human power transmission member 28 and between the human power transmission member 28 and the combined-force member 29 (that is, a force transmission path including the crank shaft 7a, the human power transmission member 28, and the combined-force member 29). Thus, a human driving force transmitted to the crank shaft 7a is transmitted from the human power transmission member 28 to the combined-force member 29 so as to always rotate the crank shaft 7a, the human power transmission member 28, and the combined-force member 29 in an integrated manner.

As shown in FIGS. 5 and 6, the motor drive unit 20 includes the combined-force member 29 that is a member rotating integrally with the crank shaft 7a and two rotation detectors 10 (10A and 10B) that detect the rotations of the crank shaft 7a and the pedals 8. In the present embodiment, a pair of optical sensors, each of which includes an outgoing part 10a and a light receiving part 10b, are disposed in parallel (specifically, in the rotation direction of toothing parts 11b of a rotating body 11 that is described later) so as to constitute the rotation detectors 10 (10A and 10B, see FIGS. 6 to 8). The rotating body 11 that passes or interrupts light from the rotation detectors 10 (10A and 10B) is attached to the outer periphery of the left end of the combined-force member 29. The rotating body 11 has a substantially cylindrical mounting part 11a that is attached and fixed to the outer periphery of the left end of the combined-force member 29 and the toothing parts (light-shielding parts) 11b that are circumferentially extended like comb toothing parts from the left end of the mounting part 11a. The toothing parts 11b and tooth spaces (light passage parts) 11c between the toothing parts 11b pass through a light emitting path between the outgoing part 10a and the light receiving part 10b of the rotation detector 10 (10A, 10B). Thus, the rotation detector 11 detects the number of revolutions (the amount of rotation) of the combined-force member 29, the crank shaft 7a, or the pedals 8. As shown in FIGS. 7 and 8 (the layout is reversed from FIG. 6), the two rotation detectors 10A and 10B are disposed so as to output signals with a phase difference of 90°. This varies input signals depending on the rotation directions of the rotation detectors 10A and 10B, thereby detecting the forward and backward rotation directions of the combined-force member 29, the crank shaft 7a, or the pedals 8 based on an input signal. As shown in FIGS. 4 and 5, in the present embodiment, the rotation detector 10 is attached to the installation point of the rotating body 11 via a support member 18 extended rearward from the inside of the front end of the unit case 22.

Moreover, a large-diameter gear 29b for receiving an auxiliary driving force from the motor 21 is integrally formed on the outer periphery of the left side of the combined-force member 29 while the driving sprocket 13 is fit onto the outer periphery of the right end of the combined-force member 29 so as to rotate integrally with the combined-force member 29. The bearing 27 fit onto the combined-force member 29 rotatably supports the crank shaft 7a via the combined-force member 29. A thin bearing or the like may be disposed between the combined-force member 29 and the crank shaft 7a.

The motor 21 has a rotating shaft 21a and a rotor 21b that are rotatably supported by bearings 32 and 33. The rotating shaft 21a of the motor 21 protrudes to the right. A toothing part 21c is formed around the protruding part. The deceleration mechanism 25 is configured such that the running torque (auxiliary driving force) of the motor 21 is amplified and is transmitted to the large-diameter gear 29b of the combined-force member 29 through the reduction gear 36. In this configuration, a reduction-gear small-diameter support shaft (an example of a reduction-gear support shaft, will be simply abbreviated as a small-diameter support shaft) 36a rotatably supported by bearings 34 and 35 and a reduction-gear large-diameter support shaft (another example of a reduction-gear support shaft, will be simply abbreviated as a large-diameter support shaft) 36b having a larger diameter than the small-diameter support shaft 36a are integrally formed on the support shaft (reduction-gear support shaft) of the reduction gear 36. A deceleration small-diameter gear (an example of a reduction gear, will be simply abbreviated as a small-diameter gear) 36c, which is a separate part of the small-diameter support shaft 36a, is assembled to the outer periphery of the small-diameter support shaft 36a so as to rotate integrally with the small-diameter support shaft 36a via a press-fitted or serration part (or spline part). Moreover, the small-diameter gear 36c is engaged with the large-diameter gear 29b of the combined-force member 29. Meanwhile, a reduction large-diameter gear (another example of the reduction gear, will be simply abbreviated as a large-diameter gear) 36d is disposed on the outer periphery of the large-diameter support shaft 36b of the reduction gear 36, and the large-diameter gear 36d is engaged with the toothing part 21c of the rotating shaft 21a of the motor 21. Between the large-diameter support shaft 36b and the large-diameter gear 36d of the reduction gear 36, a one-way clutch 37 for interrupting a human driving force is provided to prevent transmission of a turning force from the combined-force member 29 to the motor 21.

If the inner periphery of the large-diameter gear 36d of the reduction gear 36 is rotated based on a motor output (auxiliary driving force), e.g., a certain auxiliary driving force during traveling is outputted, in a direction in which the driving sprocket 13 moves forward relative to the outer periphery of the large-diameter support shaft 36b opposed to the large-diameter gear 36d (specifically, if the number of revolutions of the inner periphery of the large-diameter gear 36d of the reduction gear 36 in a forward direction is larger than that of the outer periphery of the large-diameter support shaft 36b, which is opposed to the large-diameter gear 36d, in the forward direction), the one-way clutch 37 operates so as to transmit an auxiliary driving force, which has been transmitted to the large-diameter gear 36d of the reduction gear 36, directly to the large-diameter support shaft 36b. Moreover, the auxiliary driving force is transmitted to the large-diameter gear 29b of the combined-force member 29 via the small-diameter support shaft 36a and the small-diameter toothing part 36c. Thus, a human driving force and an auxiliary driving force are combined in the combined-force member 29 and the resultant force is transmitted from the driving sprocket 13 to the rear wheel 4 through the chain 15.

On the other hand, if the inner periphery of the large-diameter gear 36d of the reduction gear 36 is rotated based on a motor output (auxiliary driving force) opposite to the direction in which the driving sprocket 13 moves forward relative to the outer periphery of the large-diameter support shaft 36b opposed to the large-diameter gear 36d (if the number of revolutions of the inner periphery of the large-diameter gear 36d of the reduction gear 36 in the forward direction is smaller than that of the outer periphery of the large-diameter support shaft 36, which is opposed to the large-diameter gear 36d, in the forward direction), for example, if the battery 12 runs out and the pedals 8 are pressed without an auxiliary driving force outputted from the motor 21, an auxiliary driving force transmitted to the large-diameter gear 36d of the reduction gear 36 is interrupted by the one-way clutch 37 so as not to be transmitted to the large-diameter support shaft 36b.

With this configuration, if the battery 12 runs out and the pedals 8 are pressed without an auxiliary driving force outputted from the motor 21, a human driving force rotates the small-diameter gear 36c, the small-diameter support shaft 36a, and the large-diameter support shaft 36b but does not rotate the large-diameter gear 36d and the rotating shaft 21a and the rotor 21b of the motor 21.

In the electric assist bicycle 1, the braking device of the rear wheel 4 is not a rim brake for pressing a brake shoe, which is activated in response to an operation of a brake lever, to the rim of the front wheel, or a band brake or a roller brake for the rear wheel. Instead of these braking devices, a coaster brake 60 shown in FIG. 9 is provided on the rear hub 9 (see FIG. 2, actually the rear hub 9 is provided behind the rear sprocket 14 shown in FIG. 2). The coaster brake 60 rotates the pedals 8 opposite to a rotation direction during forward traveling so as to brake the rear wheel 4. The braking device of the front wheel 3 may be a caliper brake or a rim brake that is activated by operating a brake lever, or the braking device may not be provided (In FIG. 1, the braking device of the front wheel 3 is not provided).

FIG. 9 is an exploded perspective view of the hub (rear hub) 9 of the rear wheel 4 provided with the coaster brake 60. FIGS. 10 and 11 are cross-sectional views of the rear hub. In the present embodiment, the used coaster brake 60 is "roller clutch driven type" for B-type bicycle coaster hub mechanisms defined by JIS (Japanese Industrial Standards) D9419. The coaster brake 60 is disposed in a hub body that constitutes the casing of the rear hub 9 and rotates integrally with the rear wheel 4.

As shown in FIGS. 9 to 11, the coaster brake 60 is rotatably fit onto a hub shaft 67 of the rear wheel 4, and the rear sprocket 14 is fixed to the outer periphery of one end (the right end in FIG. 7) of the coaster brake 60 so as to rotate integrally with the coaster brake 60. The coaster brake 60 includes, on another end thereof (the left end in FIG. 9), a driver 61 having protrusions 61a, large-diameter cam surfaces 61b, and small-diameter cam surfaces 61c that are circumferentially formed at proper intervals as shown in FIGS. 10 and 11, a cam base 63 that includes rollers 62 circumferentially disposed at proper intervals near the outer periphery of the cam base 63 and a cam portion 63a axially protruding to the left in FIG. 9, an expander 64 including an inclined cam portion 64a, which is engaged with the cam portion 63a of the cam base 63, and a tapered surface 64b, a brake shoe 65 that can be radially increased or reduced in diameter and can be brought into sliding contact with the inner surface of the rear hub 9, and a brake cone 66 having a tapered surface 66a capable of moving the brake shoe 65 to the outside.

If the pedals 8 are rotated in a normal traveling direction (the rotation direction during forward traveling, may be called a forward direction), the driver 61 is rotated via the chain 15 and the rear sprocket 14 in direction g shown in FIG. 10. Accordingly, the rollers 62 are pressed to the outside by the large-diameter portions 61b of the driver 61. The rollers 62 are thus firmly pressed between the driver 61 and the hub body of the rear hub 9 so as to integrate the hub body with the driver 61. This also rotates the overall rear wheel 4. At this point, the cam portion 63a of the cam base 63 is in contact with a thin portion of the inclined cam portion 64a of the expander 64 in the axial direction while the expander 64 is located on the right side in FIG. 9. Thus, the tapered surface 64b of the expander 64 does not come into contact with the brake shoe 65, separating the brake shoe 65 from the inner surface of the rear hub 9 without increasing the diameter of the brake shoe 65.

On the other hand, if the pedals 8 are rotated opposite to the rotation direction during forward traveling so as to reversely rotate the rear sprocket 14 via the chain 15, as shown in FIG. 9, the driver 61 is rotated in the same direction h as the rear sprocket 14. Thus, the locations of the rollers 62 are brought into contact with the small-diameter cam surfaces 61c of the driver 61 with a clearance from the inner surface of the hub body. However, when the rotation of the driver 61 in the direction h rotates the cam base 63 in the direction h via the rollers 62, the expander 64 in contact with the cam portion 63a of the cam base 63 with the inclined cam portion 64a is moved to the left in FIG. 9. Thus, the brake shoe 65 is pressed from two sides by the tapered surface 64b of the expander 64 and the tapered surface 66a of the brake cone 66 with an increasing diameter and is firmly pressed to the inner surface of the hub body of the rear hub 9. This brakes the rear wheel 4 via the rear hub 9.

If the pedals 8 are stopped during traveling and the rotation of the rear sprocket 14 is stopped via the chain 15, a force for rotating the driver 61 in the direction g shown in FIG. 10 is eliminated. Thus, as shown in FIG. 11, the rollers 62 move to the small-diameter cam surfaces 61c of the driver 61 with a clearance from the inner surface of the rear hub 9. Since the driver 61 is not rotated, the cam base 63 is not rotated and thus the expander 54 stays on the right side in FIG. 11. This does not bring the tapered surface 64b of the expander 64 into contact with the brake shoe 65, separating the brake shoe 65 from the inner surface of the rear hub 9 without increasing the diameter of the brake shoe 65. Consequently, even if the rear hub 9 is rotated, the rotary force of the rear hub 9 is not transmitted to the driver 61 and the rear sprocket 14. This leads to a freewheeling state as in the provision of a free wheel (a one-way clutch mechanism or a ratchet mechanism) between the rear hub 9 and the driver 61 or the rear sprocket 14, keeping a coasting state.

In the present embodiment, the coaster brake 60 is "roller clutch driven type". The coaster brake is not limited to this type and thus a "taper cone driven" coaster brake or a "multi-disc" coaster brake may be used instead.

With this configuration, when the pedals 8 are pressed during forward traveling, a human driving force based on a pedal force applied to the pedals 8 is transmitted from the crank shaft 7a to the combined-force member 29 through the human power transmission member 28, and then the human driving force is detected by the torque sensor 31 provided on the human power transmission member 28. Moreover, an auxiliary driving force corresponding to the human driving force is transmitted to the combined-force member 29 through, for example, the reduction gear 36 of the deceleration mechanism 25, and then the resultant force combined on the combined-force member 29 is transmitted from the driving sprocket 13 to the rear wheel 4 through the chain 15. This can facilitate riding on an uphill road and so on with the auxiliary driving force (assist force) applied from the motor 21 corresponding to the human driving force.

On the other hand, if a rider stops pressing the pedals 8 during riding, the rotations of the crank shaft 7a and the combined-force member 29 are also stopped, accordingly. Thus, the stopped state is detected by the rotation detector 10 and then the motor 21 is immediately stopped or braked. This can prevent the application of an auxiliary driving force from the motor 21 to the pedals 8, eliminating the need for applying an excessive force to the pedals 8.

If the rider reversely rotates the pedals 8 during riding, the driving sprocket 13 is also reversely rotated accordingly through the crank shaft 7a, the human power transmission member 28, and the combined-force member 29. This operation is transmitted through the chain 15 to the coaster brake 60 including the rear hub 9, activating the coaster brake 60.

In these operations, since the conventional single-shaft motor drive unit includes the one-way clutch on the end of the human power transmission member, which has the attached torque sensor, or the end of the combined-force member, vibrations during a switching operation of the one-way clutch or vibrations during engagement and passage of a cam are directly transmitted to the ends of the human power transmission member and the combined-force member. This may cause noise during torque detection, leading to deterioration of torque detection capability. Such deterioration of torque detection capability may cause difficulty in precisely controlling a torque value or quickly controlling a torque value. Even if a coaster brake is provided on the hub of the rear wheel, the rotations of the pedals in forward and backward directions cannot be transmitted to the driving sprocket or the chain. Thus, the conventional single-shaft motor drive unit is not compatible with the coaster brake.

In contrast to this configuration, a one-way clutch is not all provided on the driving force transmission path including the crank shaft 7a, the human power transmission member 28, and the combined-force member 29 in the embodiment of the present invention. Thus, even when the human power transmission member 28 includes the magneto-striction generation portion 31b of the torque sensor 31, vibrations caused by a one-way clutch are not transmitted to the human power transmission member 28. This can satisfactorily detect a torque (human driving force) so as to improve the reliability of the electric assist bicycle 1. Since a one-way clutch does not need to be assembled to the human power transmission member 28, the material of the human power transmission member 28 can be selected from a wide range of materials and thus a material with high torque detection capability is usable. This allows the use of the magneto-striction generation portion 31b of the torque sensor 31 with improved torque detection.

With the configuration, when a rider stops pressing the pedals 8 or reversely rotates the pedals 8 during riding, this operation is detected by the rotation detector 10, and then the motor 21 is immediately stopped or braked. This can prevent the application of an auxiliary driving force from the motor 21 to the pedals 8.

With the configuration, also in the case where the coaster brake 60 is disposed on the hub 9 of the rear wheel 4, a one-way clutch is not all provided on the driving force transmission path including the crank shaft 7a, the human power transmission member 28, and the combined-force member 29 and thus the rotations of the pedals 8 and the crank shaft 7a are always transmitted to the combined-force member 29. Thus, when the pedals 8 are rotated opposite to forward traveling, the rotations of the pedals 8 are satisfactorily transmitted to the coaster brake 60, satisfactorily activating the coaster brake 60.

Moreover, the rotation detector 10 is an optical sensor in this configuration and thus can easily and reliably detect a rotation of the combined-force member 29 without magnetically affecting the torque sensor 31. Specifically, the rotation detector 10 may be an additionally provided magnetic sensor, the combined-force member 29 may partially have an embedded magnet, or the large-diameter gear 29b of the combined-force member 29 may be a magnetic sensor that includes a so-called pickup sensor having a magnet. In this case, the torque detection capability may be reduced by noise generated during torque detection, for example, a change of magnetic field generated by the magneto-striction generation portion 31b. Thus, the rotation detector 10 may be a magnetic sensor. In this case, for example, an additional component for interrupting a magnetic field needs to be provided to suppress the influence of a magnetic field. In contrast, since the rotation detector 10 is an optical sensor in the present embodiment, the rotation of the combined-force member 29 can be easily and reliably detected with high torque detection capability. Since the rotation detector 10 is an optical sensor, rotations can be easily and reliably detected with swiftness under simple control. This can advantageously detect stopped or reversed rotations of the pedals 8 or the crank shaft 7a to quickly stop the motor 21.

The rotation detector 10 or the rotating body 11 may be replaced with the torque sensor 31 acting as a rotation detector. The torque sensor 31 used as the rotation detector eliminates the need for providing the rotation detector 10 or the rotating body 11 in addition to the torque sensor 31, thereby reducing the manufacturing cost of the motor drive unit 20.

In this configuration, the rotating body 11 is attached to the outer periphery of the combined-force member 29. Since the combined-force member 29 is disposed on the outer periphery of the crank shaft 7a, as will be described later, the location of the rotating body 11 has a larger diameter than in the case where the rotating body 11 is provided on the crank shaft 7a. Thus, also in the attachment of the rotating body 11 radially having the same height, the number of the toothing parts 11b formed on the rotating body 11 can be increased and rotations can be detected by the rotation detector 10 without failure, thereby improving the resolution of the rotation detector 10.

In order to obtain the same resolution for the rotation detector 10 when the rotation detector 11 including an optical sensor is attached to the crank shaft 7a, a disc having toothing parts or the like may be radially increased in size from the inner part to the outer part of the disc. In this case, a disc or cylinder having toothing parts or like is likely to be deformed. In contrast, the attachment of the rotating body 11 to the combined-force member 29 disposed on the outer periphery of the crank shaft 7a eliminates the need for extremely increasing dimensions radially from the inner part to the outer part of the rotating body 11. This can minimize the possibility of deformation on the toothing parts 11b of the rotating body 11 or the like.

The rotating body 11 may be attached to, as shown in FIG. 12, the human power transmission member 28 disposed on the outer periphery of the crank shaft 7a, instead of to the combined-force member 29. With this configuration, the installation point of the rotating body 11 is slightly smaller in diameter than the combined-force member 29 and thus may lead to a smaller resolution. However, the human power transmission member 28 and the crank shaft 7a are integrally rotated, allowing satisfactory detection of rotations of the human power transmission member 28, the crank shaft 7a, and the pedals 8. If the rotating body 11 is attached to the combined-force member 29, an auxiliary driving force from the motor 21 is directly applied to the combined-force member 29 and thus vibrations and the like caused by the auxiliary driving force are likely to affect the rotating body 11. If the rotating body 11 is attached to the human power transmission member 28, an auxiliary driving force from the motor 21 is not directly applied to the combined-force member 29 and thus advantageously, vibrations and the like caused by the auxiliary driving force are unlikely to affect the rotating body 11.

The rotating body 11 is attached to the human power transmission member 28 by bonding or press-fitting. The rotating body 11 assembled to the human power transmission member 28 by press-fitting may cause distortion on the human power transmission member 28 due to a pressing force so as to adversely affect the torque sensor 31. In contrast, the rotating body 11 attached to the combined-force member 29 does not cause such a problem and thus the rotating body 11 can be easily and reliably attached and fixed to the combined-force member 29 without adversely affecting the torque sensor 31.

The rotating body 11 attached to the combined-force member 29 or the human power transmission member 28 may be attached to the crank shaft 7a as shown in FIG. 13.

In the present embodiment, the rotating body 11 having the light-shielding toothing parts 11b is provided, but not exclusively, so as to detect light passing through the tooth spaces 11c between the toothing parts 11b. For example, the same rotating body and a light-receiving part at a light reflecting position may be provided to detect a rotational position or the number of revolutions in response to input of reflected light.

In the configuration, the rotation detector 10 for detecting the rotations of the combined-force member 29, the human power transmission member 28, and the crank shaft 7a is provided and the control unit 24 detects the forward rotations (the forward direction of the electric assist bicycle 1) of the combined-force member 29, the human power transmission member 28, and the crank shaft 7a. In this case, even if the bicycle temporarily slows down or a torque is changed by a pedal force temporarily reduced when the pedal 8 reach a top dead center or a bottom dead center, a change of an auxiliary driving force may be controlled to a smaller change. This configuration can suppress a change of an auxiliary driving force during traveling, improving riding comfort.

In this configuration, a one-way clutch is not provided between the crank shaft 7a to which the pedals 8 are assembled and the combined-force member 29 to which the driving sprocket 13 is attached. This does not change a relative position with respect to the rotation directions of the pedals 8, the crank shaft 7a, the human power transmission member 28, and the combined-force member 29. Thus, the control of the control unit 24 may be performed in various ways by estimating, for example, the positions of the pedals 8 according to the rotation positions of the crank shaft 7a, the human power transmission member 28, and the combined-force member 29 and a torque change.

For example, the electric assist bicycle 1 includes a derailleur that changes multiple gears so as to adjust the timing for a gear change in response to a gear change instruction. The control unit 24 estimates, for example, the position of the pedal 8 corresponding to a position relative to the rotation direction of the combined-force member 29 based on a torque change and an output signal detected by the rotation detector 10. In response to the gear change instruction, the gear may be changed when a pedal force applied to the pedal 8 decreases (for example, when the pedal 8 is located at the top dead center or the bottom dead center), at a proper gear change time. At the time of the gear change instruction, this configuration can properly change the gear while minimizing a load to a rider's foot.

Furthermore, in the configuration, the reduction gear 36 of the deceleration mechanism 25 is disposed on an auxiliary-driving-force transmission path from the motor 21 to the combined-force member 29, the deceleration mechanism 25 including the small-diameter and large-diameter gears 36c and 36d that serve as a plurality of reduction gears, and the small-diameter and large-diameter support shafts 36a and 36b that serve as reduction gear support shafts supporting the small-diameter and large-diameter gears 36c and 36d. In the present embodiment, between the large-diameter gear 36d and the large-diameter support shaft 36b, the one-way clutch 37 for interrupting a human driving force is provided to prevent transmission of a human driving force from the combined-force member 29 to the motor 21.

With this configuration, if the battery 12 runs out and the pedals 8 are pressed without an auxiliary driving force outputted from the motor 21, a human driving force rotates the small-diameter gear 36c, the small-diameter support shaft 36a, and the large-diameter support shaft 36b but does not rotate the large-diameter gear 36d and the rotating shaft 21a and the rotor 21b of the motor 21. Thus, it is not necessary to apply an excessive force to the pedals 8 (a so-called drag resistance can be considerably reduced). In comparison with the conventional single-shaft motor drive unit shown in FIG. 17, a human driving force does not rotate the large-diameter gear 36d and the rotating shaft 21a of the motor 21, reducing a force for rotating the pedals 8 accordingly.

In the present embodiment, as shown in FIG. 3, the motor 21 and the control unit 24 substantially overlap each other in side view. Thus, the area of the motor drive unit 20 in side view (laterally projected area) can be advantageously reduced (made more compact), particularly as the single-shaft motor drive unit 20. The motor 21 and the control unit 24 in front and side views are opposed to each other in the width direction of the motor drive unit 20 (the motor 21 is disposed on the left side while the control unit 24 is disposed on the right side). Thus, the control unit 24 is hardly affected by heat from the motor 21 so as to keep high reliability.

In the present embodiment, the one-way clutch 37 for interrupting a human driving force is disposed between the large-diameter gear 36d and the large-diameter support shaft 36b. The one-way clutch 37 for interrupting a human driving force may be disposed between the small-diameter gear 36c and the small-diameter support shaft 36a.

In the present embodiment, the coaster brake 60 is provided on the rear hub 9. The present invention is not limited to this configuration. Specifically, the motor drive unit 20 of the present embodiment is also applicable to a rim brake, a band brake, or a roller brake that is provided as a braking device instead of the coaster brake 60 and is activated by operating a brake lever 70 (see FIG. 14) attached to the handle bar 5 as on an ordinary bicycle. In this case, a pedal-stopping one-way clutch that does not transmit a rotary force of the rear wheel 4 to the chain 15 may be disposed on the hub 9 of the rear wheel 4 so as to prevent the pedals 8 from rotating during forward traveling on a downhill or the like.

In the present embodiment, a front derailleur is not attached and the single driving sprocket 13 (single stage) is provided. The present invention is not limited to this configuration. A front derailleur may be attached with small and large driving sprockets.

### Industrial Applicability

The present invention is applicable to a variety of electric assist bicycles capable of traveling with a combination of a human driving force generated by a pedal force from a pedal and an auxiliary driving force generated by a motor.

## Claims

1. An electric assist bicycle (1) capable of traveling with a combination of a human driving force generated by a pedal force from a pedal (8) and an auxiliary driving force generated by a motor (21),
the electric assist bicycle (1) being configured such that a cylindrical human power transmission member (28) for receiving a human driving force is disposed on an outer periphery of a crank shaft (7a) for receiving the human driving force transmitted from the pedal (8), the human power transmission member (28) having a magneto-striction generation portion (31b) for a torque sensor (31) for detecting the human driving force,
a combined-force member (29) is disposed on the outer periphery of the crank shaft (7a) so as to combine the human driving force transmitted through the human power transmission member (28) and an auxiliary driving force from the motor (21), and
a resultant force of the human driving force and the auxiliary driving force that are combined by the combined-force member (29) is transmitted to a rear wheel (4) through a driving force output wheel (13) coaxial with the crank shaft (7a) and an endless driving force transmission member (15) looped over the driving force output wheel (13),
**characterized in that** the crank shaft (7a), the human power transmission member (28), and the combined-force member (29) form a driving force transmission path and wherein, when the crank shaft (7a) is rotated it rotates the human power transmission member (28) and the combined-force member (29) accordingly regardless of relative rotation directions of the crank shaft (7a), the human power transmission member (28), and the combined-force member (29),
the electric assist bicycle (1) further comprising a rotation detector (10) that detects a rotation of one of the crank shaft (7a) and a member rotating integrally with the crank shaft (7a).

2. The electric assist bicycle (1) according to claim 1, wherein the rotation detector (10) is configured so as to detect a stopped or reversed rotation of the pedal (8), and
the motor (21) is stopped or braked by a control unit (24) when the rotation detector (10) detects a stopped or reversed rotation of the pedal (8).

3. The electric assist bicycle (1) according to one of claims 1 and 2, wherein the rotation detector (10) is an optical sensor.

4. The electric assist bicycle (1) according to one of claims 1 and 2, wherein the torque sensor (31) serves as the rotation detector (10).

5. The electric assist bicycle (1) according to one of claims 1 and 2, wherein the rotation detector (10) is a magnetic sensor provided in addition to the torque sensor (31).

6. The electric assist bicycle (1) according to claim 3, further comprising a rotating body (11) attached to an outer periphery of one of the combined-force member (29) and the human power transmission member (28), the rotating body (11) blocking or reflecting light of the optical sensor.

7. The electric assist bicycle (1) according to any one of claims 1 to 6, wherein the control unit (24) is provided so as to estimate a pedal position corresponding to a position relative to a rotation direction of the crank shaft (7a), based on a torque change and an output signal detected by the rotation detector (10).

8. The electric assist bicycle (1) according to claim 7, further comprising a derailleur capable of adjusting timing for a gear change in response to a gear change instruction, and
in response to the gear change instruction, the control unit (24) changes a gear when a pedal force applied to the pedal (8) is estimated to be reduced.

9. The electric assist bicycle (1) according to any one of claims 1 to 8, further comprising a coaster brake (60) provided on a hub (9) of the rear wheel (4), the coaster brake (60) being activated when the pedal (8) is rotated opposite to a forward rotation direction.

10. The electric assist bicycle (1) according to any one of claims 1 to 9, further comprising a deceleration mechanism (25) disposed on an auxiliary-driving-force transmission path from the motor (21) to the combined-force member (29), the deceleration mechanism (25) including a plurality of reduction gears (36c, 36d) and reduction gear support shafts (36a, 36b) that support the reduction gears (36c, 36d),
wherein a one-way clutch (37) for interrupting a human driving force is provided to prevent transmission of a human driving force from the combined-force member (29) to the motor (21), between one of the reduction gears (36c, 36d) and one of the reduction gear support shafts (36a, 36b).

11. The electric assist bicycle (1) according to any one of claims 1 to 10, wherein the motor (21), the combined-force member (29), the deceleration mechanism (25), and the control unit (24) are assembled into a motor drive unit (20), and
the motor (21) and the control unit (24) overlap each other in side view and are opposed to each other in a width direction of the motor drive unit (20).

## Patentansprüche

1. Elektrisch unterstütztes Fahrrad, das mit einer Kombination aus mittels einer Pedalkraft von einem Pedal (8) erzeugten menschlichen Antriebskraft und einer von einem Motor (21) erzeugten Zusatz-Antriebskraft fahren kann,
wobei das elektrisch unterstützte Fahrrad (1) so ausgeführt ist, dass ein zylindrisches Muskelkraft-Übertragungselement (28) zum Aufnehmen einer menschlichen Antriebskraft an einem Außenumfang einer Kurbelwelle (7a) angeordnet ist, um die von dem Pedal (8) übertragene menschliche Antriebskraft aufzunehmen, wobei das Muskelkraft-Übertragungselement (20) einen Magnetostriktions-Erzeugungsabschnitt (31b) für einen Drehmoment-Sensor (31) zum Erfassen der menschlichen Antriebskraft aufweist,
ein Element (29) zum Kombinieren von Kraft an dem Außenumfang der Kurbelwelle (7a) angeordnet ist, um die über das Muskelkraft-Übertragungselement (28) übertragene menschliche Antriebskraft und die Zusatz-Antriebskraft von dem Motor (21) zu kombinieren, und
eine resultierende Kraft der menschlichen Antriebskraft und der Zusatz-Antriebskraft, die durch das Element (29) zum Kombinieren von Kraft kombiniert werden, über ein Antriebskraft-Ausgaberad (13) koaxial zu der Kurbelwelle (7a) und ein endloses Antriebskraft-Übertragungselement (15), das über das Antriebskraft-Ausgaberad (13) läuft, zu einem Hinterrad (4) übertragen wird,
**dadurch gekennzeichnet, dass**
die Kurbelwelle (7a), das Muskelkraft-Übertragungselement (28) und das Element (29) zum Kombinieren von Kraft einen Antriebskraft-Übertragungsweg bilden, und wobei, wenn die Kurbelwelle (7a) gedreht wird, sie das Muskelkraft-Übertragungselement (28) sowie das Element (29) zum Kombinieren von Kraft dementsprechend unabhängig von relativen Drehrichtungen der Kurbelwelle (7a), des Muskelkraft-Übertragungselementes (28) und des Elementes (29) zum Kombinieren von Kraft dreht,
das elektrisch unterstützte Fahrrad (1) des Weiteren einen Drehungs-Detektor (10) umfasst, der eine Drehung der Kurbelwelle (7a) oder eines Elementes erfasst, das sich integral mit der Kurbelwelle (7a) dreht.

2. Elektrisch unterstütztes Fahrrad (1) nach Anspruch 1, wobei der Drehungs-Detektor (10) so ausgeführt ist, dass er eine angehaltene oder umgekehrte Drehung des Pedals (8) erfasst, und
der Motor (21) durch eine Steuerungs-Einheit (24) angehalten oder abgebremst wird, wenn der Drehungs-Detektor (10) eine angehaltene oder umgekehrte Drehung des Pedals (8) erfasst.

3. Elektrisch unterstütztes Fahrrad (1) nach einem der Ansprüche 1 und 2, wobei der Drehungs-Detektor (10) ein optischer Sensor ist.

4. Elektrisch unterstütztes Fahrrad (1) nach einem der Ansprüche 1 und 2, wobei der Drehmoment-Sensor (31) als der Drehungs-Detektor (10) dient.

5. Elektrisch unterstütztes Fahrrad (1) nach einem der Ansprüche 1 und 2, wobei der Drehungs-Detektor (10) ein Magnet-Sensor ist, der zusätzlich zu dem Drehmoment-Sensor (31) vorhanden ist.

6. Elektrisch unterstütztes Fahrrad (1) nach Anspruch 3, das des Weiteren einen rotierenden Körper (11) umfasst, der an einem Außenumfang des Elementes (29) zum Kombinieren von Kraft oder des Muskelkraft-Übertragungselementes (28) angebracht ist, wobei der rotierende Körper (11) Licht des optischen Sensors sperrt oder reflektiert.

7. Elektrisch unterstütztes Fahrrad (1) nach einem der Ansprüche 1 bis 6, wobei die Steuerungseinheit (24) so eingerichtet ist, dass sie eine Pedalposition entsprechend einer Position relativ zu einer Drehungsrichtung der Kurbelwelle (7a) auf Basis einer Drehmomentänderung und eines Ausgangssignals schätzt, die von dem Drehungs-Detektor (10) erfasst werden.

8. Elektrisch unterstütztes Fahrrad (1) nach Anspruch 7, das des Weiteren eine Kettenschaltung umfasst, die einen Zeitpunkt für einen Gangwechsel in Reaktion auf eine Gangwechsel-Anweisung regulieren kann, und wobei die Steuerungseinheit (24) in Reaktion auf die Gangwechsel-Anweisung einen Gang wechselt, wenn geschätzt wird, dass eine auf das Pedal (8) ausgeübte Pedalkraft reduziert wird.

9. Elektrisch unterstütztes Fahrrad (1) nach einem der Ansprüche 1 bis 8, das des Weiteren eine Rücktrittbremse (60) umfasst, die an einer Nabe (9) des Hinterrades (4) vorhanden ist, wobei die Rücktrittbremse (60) aktiviert wird, wenn das Pedal (8) entgegengesetzt zu einer Vorwärts-Drehungsrichtung gedreht wird.

10. Elektrisch unterstütztes Fahrrad (1) nach einem der Ansprüche 1 bis 9, das des Weiteren einen Abbrems-Mechanismus (25) umfasst, der an einem Weg zur Übertragung von Zusatz-Antriebskraft von dem Motor (21) zu dem Element (29) zum Kombinieren von Kraft angeordnet ist, wobei der Abbrems-Mechanismus (25) eine Vielzahl von Untersetzungs-Zahnrädern (36c, 36d) und Tragewellen (36a, 36b) für die Untersetzungs-Zahnräder enthält, die die Untersetzungs-Zahnräder (36c, 36d) tragen,
und eine Freilaufkupplung (37) zum Unterbrechen einer menschlichen Antriebskraft, die Übertragung einer menschlichen Antriebskraft von dem Element (29) zum Kombinieren von Kraft zu dem Motor (21) unterbricht, zwischen einem der Untersetzungs-Zahnräder (36c, 36d) und einer der Tragewellen (36a, 36b) für die Untersetzungs-Zahnräder vorhanden ist.

11. Elektrisch unterstütztes Fahrrad (1) nach einem der Ansprüche 1 bis 10, wobei der Motor (21), das Element (29) zum Kombinieren von Kraft, der Abbrems-Mechanismus (25) und die Steuerungs-Einheit (24) zu einer Motorantriebs-Einheit (20) zusammengesetzt sind, und
der Motor (21) und die Steuerungs-Einheit (24) einander in Seitenansicht überdecken und einander in einer Breitenrichtung der Motorantriebs-Einheit (20) gegenüberliegen.

## Revendications

1. Bicyclette à assistance électrique (1) capable de se déplacer par le biais d'une combinaison d'une force d'entraînement d'origine humaine générée par une force de pédalage provenant d'une pédale (8) et une force d'entraînement auxiliaire générée par un moteur (21),
la bicyclette à assistance électrique (1) étant configurée de telle manière qu'un élément de transmission de puissance d'origine humaine cylindrique (28) destiné à recevoir une force d'entraînement d'origine humaine est disposé sur une périphérie extérieure d'un arbre à vilebrequin (7a) pour recevoir la force d'entraînement d'origine humaine transmise par la pédale (8), l'élément de transmission de puissance d'origine humaine (28) ayant une partie de génération de magnétostriction (31b) pour un capteur de couple (31) pour détecter la force d'entraînement d'origine humaine,
une élément de forces combinées (29) disposé sur la périphérie extérieure de l'arbre de vilebrequin (71) de manière à combiner la force d'entraînement d'origine humaine transmise par l'élément de transmission de puissance d'origine humaine (28) et une force d'entraînement auxiliaire provenant du moteur (21), et
une force résultant de la force d'entraînement d'origine humaine et de la force d'entraînement auxiliaire qui sont combinées par l'élément de forces combinées (29) est transmise à une roue arrière (4) par l'intermédiaire d'une roue de sortie de force d'entraînement (13) coaxiale avec l'arbre de vilebrequin (7a) et un élément de transmission de force d'entraînement sans fin (15) enroulé sur la roue de sortie de force d'entraînement (13),
**caractérisée en ce que**
l'arbre de vilebrequin (7a), l'élément de transmission de puissance d'origine humaine (28) et l'élément de forces combinées (29) forment un chemin de transmission de force d'entraînement et où lorsque l'arbre de vilebrequin (7a) est mis en rotation, il fait tourner l'élément de transmission de puissance d'origine humaine (28) et l'élément de forces combinées (29) quelle que soient les directions de rotation relatives de l'arbre de vilebrequin (7a), de l'élément de transmission de puissance d'origine humaine (28) et de l'élément de transmission de forces combinées (29,
la bicyclette à assistance électrique (1) comprenant en outre un détecteur de rotation (10) qui détecte une rotation de l'arbre de vilebrequin (7a) ou d'un élément tournant intégralement avec l'arbre de vilebrequin (7a).

2. Bicyclette à assistance électrique (1) selon la revendication 1, où le détecteur de rotation (10) est configuré de manière à détecter une rotation arrêtée ou inversée de la pédale (8), et
le moteur (21) est arrêté ou freiné par une unité de commande (24) quand le détecteur de rotation (10) détecte une rotation arrêtée ou inversée de la pédale (8).

3. Bicyclette à assistance électrique (1) selon l'une des revendications 1 et 2, où le détecteur de rotation (10) est un capteur optique.

4. Bicyclette à assistance électrique (1) selon l'une des revendications 1 et 2, où le capteur de couple (31) sert de détecteur de rotation (10).

5. Bicyclette à assistance électrique (1) selon l'une des revendications 1 et 2, où le détecteur de rotation (10) est un capteur magnétique prévu en supplément du capteur de couple (31).

6. Bicyclette à assistance électrique (1) selon la revendication 3, comprenant en outre un corps rotatif (11) attaché à une périphérie extérieure de l'élément de forces combinées (29) ou de l'élément de transmission de puissance d'origine humaine (28), le corps rotatif (11) bloquant ou reflétant de la lumière provenant du capteur optique.

7. Bicyclette à assistance électrique (1) selon l'une quelconque des revendications 1 à 6, où l'unité de commande (24) est prévue afin d'estimer une position de pédale correspondant à une position relative à une direction de rotation de l'arbre de vilebrequin (7a), en se fondant sur un changement de couple et un signal de sortie détecté par le détecteur de rotation (10).

8. Bicyclette à assistance électrique (1) selon la revendication 7, comprenant en outre un dérailleur capable d'adapter un moment de changement de rapport en réponse à un ordre de changement de rapport et, en réponse à l'ordre de changement de rapport, l'unité de commande (24) change un rapport lorsqu'il est estimé qu'une force de pédalage appliquée à la pédale (8) est réduite.

9. Bicyclette à assistance électrique (1) selon l'une quelconque des revendications 1 à 8, comprenant en outre un frein à rétropédalage (60) disposé sur un moyeu (9) de la roue arrière (4), le frein à rétropédalage (60) étant activé quand la pédale (8) est tournée une direction opposée à une direction de rotation avant.

10. Bicyclette à assistance électrique (1) selon l'une quelconque des revendications 1 à 9, comprenant en outre un mécanisme de décélération (25) disposé sur un chemin de transmission de force d'entraînement auxiliaire du moteur (21) à l'élément de force combinée (29), le mécanisme de décélération (25) incluant une pluralité d'engrenages de réduction (36c, 36d) et d'arbres de support d'engrenage de réduction (36a, 36b) qui supportent les engrenages de réduction (36c, 36d),
où un embrayage unidirectionnel (37) pour interrompre une force d'entraînement d'origine humaine est prévu entre l'un des engrenages de réduction (36c, 36d) et l'un des arbres de support d'engrenage de réduction (36a, 36b) pour empêcher la transmission d'une force d'entraînement d'origine humaine de l'élément de forces combinées (29) au moteur (21).

11. Bicyclette à assistance électrique (1) selon l'une quelconque des revendications 1 à 10, où le moteur (21), l'élément de forces combinées (29), le mécanisme de décélération (25) et l'unité de commande (24) sont assemblés en une unité d'entraînement de moteur (20), et
le moteur (21) et l'unité de commande (24) sont superposés dans une vue latérale et sont opposés l'un à l'autre dans une direction de la largeur de l'unité d'entraînement de moteur (20).
